# EUROPÄISCHE PATENTANMELDUNG

(11) **EP 3 979 225 A1**
(43) Veröffentlichungstag der Anmeldung: **06.04.2022**
(21) Anmeldenummer: 21194442.6
(22) Anmeldetag: 01.09.2021
(51) Int. Cl.: G08G 1/0965, B60W 30/09, B60G 17/016, G08G 1/16

(54) **VERFAHREN ZUM BETREIBEN EINES KRAFTFAHRZEUGS ALS VERKEHRSTEILNEHMER AUF EINER STRASSE SOWIE KRAFTFAHRZEUG**

(30) Priorität: 28.09.2020 DE 102020212141
(71) Anmelder: VOLKSWAGEN AG, 38440 Wolfsburg (DE)
(72) Erfinder: Münning, Daniel, 38124 Braunschweig (DE); Ackert, Lukas, 38373 Frellstedt (DE)

(57) **Zusammenfassung**

Die Erfindung betrifft ein Verfahren zum Betreiben eines Kraftfahrzeugs (1) als erstem Verkehrsteilnehmer auf einer Straße (100) umfasst die Schritte:
a) Gewinnen von Informationen zu der aktuellen und/oder einer möglichen künftigen Verkehrssituation auf der Straße (100),
b) Ermitteln anhand der gewonnenen Informationen, ob nach einem vorbestimmten Kriterium ein Abweichen von der gegenwärtigen Fahrt- und/oder Lenkrichtung oder von einem Navigationsziel auf der Straße angezeigt ist, um einem zweiten Verkehrsteilnehmer (2) unmittelbar oder mittelbar über dritte Verkehrsteilnehmer (3) den Weg freizumachen, und falls ja,
c) Ermitteln eines neuen Fahrziels (300) auf oder an der Straße,
d) Ermitteln, ob zum Erreichen des neuen Fahrziels (300) auf ein Hindernis (200) gefahren werden muss, und falls ja,
e) Prüfen, ob eine Einstellung des Fahrwerks (22a, 22b) des Kraftfahrzeugs (1) mit dem Auffahren auf das Hindernis (200) vereinbar ist, und falls ja,
f) Veranlassen, dass das Kraftfahrzeug (1) das neue Fahrziel (300) ansteuert.

## Beschreibung

Die vorliegende Erfindung betrifft ein Verfahren zum Betreiben eines Kraftfahrzeugs als Verkehrsteilnehmer auf einer Straße. Sie betrifft auch ein entsprechendes Kraftfahrzeug, das das Verfahren einsetzt.

Bei der Erfindung kann vorgesehen sein, dass das Kraftfahrzeug ein verstellbares Fahrwerk aufweist und an die Gegebenheiten der Fahrbahn entsprechend anpassbar ist, wobei das Fahrwerk insbesondere während der Fahrt spontan umstellbar ist, und zwar wahlweise durch den Fahrzeugführer (Fahrer) selbst mittels einer entsprechenden Eingabe an einer Eingabeeinrichtung, oder autonom durch das Kraftfahrzeug, gesteuert durch eine entsprechende Datenverarbeitungseinrichtung (Steuereinrichtung). Solche verstellbaren Fahrwerke sind allgemein bekannt, wobei hier exemplarisch die DE 10 2006 010 101 A1, die DE 10 2012 024 086 A1 sowie die DE 10 2015 118 471 A1 zu nennen sind. Die Erfindung ist jedoch nicht darauf beschränkt, dass solche Fahrwerke eingesetzt werden, wie sie in diesen Druckschriften beschrieben sind. Die Erfindung ist sowohl bei rein fahrergeführten Fahrzeugen als auch bei teilautonom fahrenden Fahrzeugen einsetzbar, gegebenenfalls auch bei künftigen vollautonom fahrenden Fahrzeugen.

Jede Verkehrssituation, etwa bei Befahren einer freien Straße oder auch im Stop-and-Go-Betrieb, kann sich sehr schnell ändern. Ein typischer Fall, in dem der Fahrer oder das Fahrzeug schnell reagieren muss, besteht beim Herannahen eines Notfahrzeugs (eines Krankenwagens, eines Feuerwehrautos oder eines Polizeiwagens), dem aufgrund der geltenden Gesetze beziehungsweise des Verkehrsüblichen Platz zu machen ist. Der Fahrzeugführer, herausgerissen aus einer Situation der Konzentration, muss schnell reagieren und das Fahrzeug zur Seite fahren.

Es ist Aufgabe der Erfindung, einen Weg aufzuzeigen, wie ein Kraftfahrzeug betreibbar ist, damit es einem anderen Verkehrsteilnehmer schnell den Weg freimachen kann.

Die Aufgabe wird durch ein Verfahren mit den Merkmalen des Anspruchs 1 und ein Kraftfahrzeug mit den Merkmalen des Anspruchs 8 gelöst.

Das erfindungsgemäße Verfahren zum Betreiben eines Kraftfahrzeugs als einem ersten Verkehrsteilnehmer auf einer Straße beginnt somit mit dem Schritt des Gewinnens von Informationen zu der aktuellen und/oder einer möglichen künftigen Verkehrssituation auf der Straße. Der Begriff der Information beinhaltet hier, dass bestimmte inhaltliche Kategorien erfüllt werden. Die "Verkehrssituation" wird somit nicht zwingend durch eine exakte Angabe von Positionen anderer Verkehrsteilnehmer beschrieben, sondern kann auch durch die grobe Angabe "anderes Kraftfahrzeug auf benachbarter Fahrbahn", oder "anderes Kraftfahrzeug im Abstand von zwischen 150 m und 75 m" und dergleichen ausgedrückt sein. Das Verfahren beinhaltet sodann, dass durch eine geeignete Einheit/geeignete Einheiten des Kraftfahrzeugs anhand der gewonnenen Informationen ermittelt wird, ob nach einem vorbestimmten Kriterium ein Abweichen von der gegenwärtigen Fahrt- und/oder Lenkrichtung oder von einem Navigationsziel auf der Straße angezeigt ist, um einem zweiten Verkehrsteilnehmer unmittelbar den Weg freizumachen - oder auch mittelbar über dritte Verkehrsteilnehmer, denen der Weg freigemacht wird, damit diese ihrerseits ausweichen können, um dem zweiten Verkehrsteilnehmer den Weg freizumachen. Das vorbestimmte Kriterium kann beinhalten, dass sich eine vorbestimmte Art von zweitem Verkehrsteilnehmer (etwa mit einer Priorität zum Fahren auf der Straße gegenüber dem Kraftfahrzeug selbst) in einem vorbestimmten Mindestabstand befindet und/oder mit einer bestimmten Mindestgeschwindigkeit herannaht, die oberhalb einer Grenze liegt, oder ein Signal ("Blaulicht") abgibt, und dergleichen. Ein Abweichen von der gegenwärtigen Fahrtrichtung kann angezeigt sein, wenn sich der zweite Verkehrsteilnehmer in unmittelbarer Nähe befindet. Dies gilt auch für ein Abweichen von einer Lenkrichtung. Ein etwa mittels eines Navigationssystems des Kraftfahrzeugs angesteuertes eher fernerliegendes Navigationsziel kann so liegen, dass bei Verfolgung der Fahrt zu diesem Navigationsziel der zweite Verkehrsteilnehmer behindert werden würde. In diesem Fall kann auch bei einem herannahenden zweiten Verkehrsteilnehmer, der noch nicht unmittelbar sichtbar ist, vorsorglich schon die Navigation unterbrochen oder beendet werden. Bei dem Verfahren wird ferner ein neues Fahrziel auf oder an der Straße ermittelt. Dieses neue Fahrziel soll sich vorzugsweise von einem herkömmlichen Navigationsziel qualitativ unterscheiden insoweit, als es innerhalb eines Abstands von beispielsweise 200 m, weiter beispielsweise von 100 m, weiter beispielsweise von höchstens 50 m, weiter beispielsweise innerhalb von 25 m, weiter beispielsweise höchstens von 10 m, durch das Kraftfahrzeug erreichbar ist. Das Verfahren beinhaltet außerdem den Prüfschritt, dass ermittelt wird, ob zum Erreichen des neuen Fahrziels auf ein Hindernis gefahren werden muss. Falls dies nicht der Fall ist, wird unmittelbar veranlasst, dass das Kraftfahrzeug das neue Fahrziel ansteuert. Falls dies allerdings der Fall ist, wird geprüft, ob eine Einstellung des Fahrwerks des Fahrzeugs mit dem Auffahren auf das Hindernis vereinbar ist. Dies kann etwa von der Höhe eines Bordsteins und den aktuellen Fahrwerkseinstellungen abhängig sein. Falls die Einstellung des Fahrwerks mit dem Hindernis vereinbar ist, wird unmittelbar veranlasst, dass das Kraftfahrzeug das neue Fahrziel ansteuert, sonst hingegen wird beispielsweise veranlasst, dass der Fahrer über das Hindernis informiert wird (z.B. Pop-up-Information). Der Fahrer kann dann unter Umständen auf das Erreichen des neuen Fahrziels verzichten. Bei verstellbarem Fahrwerk kann er aktiv eine Anpassung an das Hindernis vornehmen (über eine vorhandene Eingabeeinrichtung). Das Fahrwerk kann unter Umständen auch selbsttätig angepasst werden. Das erfindungsgemäße Verfahren endet bei positivem Ausgang der beiden Prüfschritte, hinsichtlich des Bestehens des Hindernisses und der Eignung des Fahrzeugs für das Hindernis, damit, dass das Kraftfahrzeug das neue Fahrziel ansteuert.

Der zweite Verkehrsteilnehmer kann zwar ein beliebiges Fahrzeug mit Priorität sein (zum Beispiel eines hochrangigen Politikers oder dergleichen), im typischen Fall handelt es sich jedoch um einen Krankenwagen, ein Feuerwehrauto oder einen Polizeiwagen. Diese sind akustisch im hörbaren Frequenzbereich erkennbar (anhand ihres Signals "Martinshorn"), insbesondere des darin enthaltenen Tonintervalls. Auch eine Ultraschallerkennung (zum Beispiel anhand bestimmter Geschwindigkeitsprofile) ist möglich. Ein solcher zweiter Verkehrsteilnehmer kann zudem (u.a. am "Blaulicht") optisch erkannt werden (Kamera mit nachgeschalteter Bilderkennung, oder anhand typischer Profile im Spektrum per Infrarot beziehungsweise per Ultraviolett). Schließlich kann der zweite Verkehrsteilnehmer alternativ oder zusätzlich selbst weitere Signale abgeben (drahtlos, insbesondere per Funk), die durch eine entsprechende Empfangsvorrichtung an dem Kraftfahrzeug empfangbar sind, und genauso können auch dritte Verkehrsteilnehmer über die sogenannte Car2Car-Kommunikation Informationen über den zweiten Verkehrsteilnehmer an das Kraftfahrzeug als erstem Verkehrsteilnehmer übermitteln. In modernen Verkehrsleitsystemen sind stationäre Einheiten an einer Straße vorgesehen, die das Verkehrsaufkommen beobachten und ausgestaltet sein können, bestimmte Verkehrsteilnehmer wie Krankenwagen, Feuerwehrautos und Polizeiwagen zu erkennen. Solche stationären Einheiten können drahtlos das Kraftfahrzeug als ersten Verkehrsteilnehmer über das Herannahen des zweiten Verkehrsteilnehmers informieren.

Des Weiteren können auch (Flug-)Drohnen oder auch andere Flugobjekte das Verkehrsgeschehen beobachten. Schließlich ist es bekannt, dass über Satelliten Verkehrsinformationen an ein Kraftfahrzeug übermittelt werden. Mittels solcher Satelliten können u.a. sogenannte Schwarmdaten zur Verfügung gestellt werden: Jedes oder fast jedes Kraftfahrzeug übermittelt seinen Standort an eine zentrale Einrichtung (insbesondere über Satellit), die die Daten sodann auswertet und entsprechende Informationen an die Kraftfahrzeuge zurückübermittelt.

Der Schritt des Veranlassens, dass das Kraftfahrzeug das neue Fahrziel ansteuert, kann beinhalten, dass dem Fahrer zumindest ein Signal zur Empfehlung des neuen Fahrziels gegeben wird. Auf diese Weise bleibt der Fahrer autonom, kann die Verkehrssituation selbst beurteilen und sich gegebenenfalls anders entscheiden, wobei er aber in der Regel der Fahrempfehlung folgen wird.

Eine solche Empfehlung kann mit akustischer Sprachaufforderung erfolgen, die Details zum neuen Fahrziel angibt ("Bitte nach rechts über den Bordstein fahren, um den Weg freizumachen") und/oder sie kann ein akustisches und/oder haptisches Signal (letzteres etwa am Lenkrad) zur Gewinnung der Aufmerksamkeit des Fahrers beinhalten, damit dieser von einem Display Details zu einer neuen Fahrtrichtung und/oder zu dem neuen Fahrziel abliest. Entsprechend kann alternativ oder zusätzlich eine optische Signalisierung erfolgen, die mit dem Display gekoppelt ist (spezielle Lampe). Das Display kann außerhalb einer normalen Navigation bereitgestellt sein, also einen speziellen Bereich auf der Armatur beinhalten, der sonst anderweitig genutzt wird oder dergleichen, oder es kann in eine laufende Navigation integriert sein, wobei bei der laufenden Navigation beispielsweise ein Wechsel in der Darstellung erfolgt (etwa: blaue oder rote Pfeile anstelle weißer Pfeile und dergleichen). Gegebenenfalls kann die Navigation spontan aktiviert werden. Ferner kann der Fahrer durch haptische Signale an der Lenkvorrichtung des Kraftfahrzeugs angeleitet werden, wohin er sein Fahrzeug steuern soll. Beispielsweise kann durch ein partiell vibrierendes Lenkrad der Fahrer dazu gebracht werden, die entsprechenden Stellen gerade nicht zu berühren und so das Lenkrad einzuschlagen oder dergleichen. Schließlich können moderne Systeme wie vom Fahrer getragene Brillen oder vom Fahrer getragene Wearables genutzt werden, welche über eine drahtlose Verbindung (Bluetooth^{®} oder dergleichen) mit einer Sende-/ Empfangseinrichtung des Fahrzeugs gekoppelt sind.

Alternativ zum Abgeben einer Fahrempfehlung kann vorgesehen sein, dass das Kraftfahrzeug autonom zu dem neuen Fahrziel gefahren wird. Das autonome Fahren kann zudem auch eingeschaltet werden, wenn der Fahrer gar nicht reagiert oder auf eine solche Weise reagiert, die die Verkehrssicherheit gefährden könnte.

Parallel zum Abgeben von Empfehlungen zum Fahrziel oder dem autonomen Fahren kann das Fahrwerk entweder automatisch passend eingestellt werden, oder aufgrund einer Empfehlung auf eine entsprechende Eingabe des Fahrers hin passend eingestellt werden. Zur Empfehlung kann dem Fahrer ein optisches, akustisches oder haptisches Signal gegeben werden.

Das erfindungsgemäße Kraftfahrzeug umfasst eine Einrichtung zum Gewinnen von Informationen zur aktuellen und/oder einer möglichen künftigen Verkehrssituation auf einer von dem Kraftfahrzeug befahrenen Straße, eine Einrichtung zum Erfassen von Informationen zur Fahrbahn und/oder Fahrbahnbegrenzung in der Umgebung des Kraftfahrzeugs und eine Datenverarbeitungseinrichtung, die ausgelegt ist, die von der Einrichtung zum Gewinnen von Informationen gewonnenen Informationen zu empfangen und auf das Herannahen eines solches anderen Verkehrsteilnehmers nach einem vorbestimmten Kriterium auszuwerten, dem der Weg freizumachen ist, wobei die Datenverarbeitungseinrichtung anhand der von der Einrichtung zum Erfassen von gewonnenen Informationen ermittelt, durch Ansteuern welches neuen Fahrziels dem anderen Verkehrsteilnehmer der Weg freigemacht werden kann. Im Falle des Herannahens des anderen Verkehrsteilnehmers wird die Einrichtung zum Erfassen von Informationen zur Fahrbahn und/oder Fahrbahnbegrenzung in der Umgebung des Kraftfahrzeugs aktiviert, oder es wird bei bereits aktiver Einrichtung die Abfrage der gewonnenen Informationen/Messwerten etc. aktiviert. Die Datenverarbeitungseinrichtung ist ferner ausgelegt, die sodann erfassten Informationen zur Fahrbahn und/oder Fahrbahnbegrenzung in der Umgebung des Kraftfahrzeugs daraufhin auszuwerten, ob es ein Hindernis in der Umgebung gibt und das Fahrwerk mit dem Auffahren auf das Hindernis vereinbar ist, und sie ist zudem ausgelegt, in diesem Fall zu veranlassen, dass das neue Fahrziel angesteuert wird. Die Vorteile des erfindungsgemäßen Verfahrens sind bei dem erfindungsgemäßen Kraftfahrzeug entsprechend verwirklicht.

Beispielsweise weist das Kraftfahrzeug ein verstellbares Fahrwerk auf, das an Hindernisse (insbesondere Bordsteine) anpassbar ist,

Die Einrichtung zum Erfassen von Informationen zur Fahrbahn und/oder Fahrbahnbegrenzung in der Umgebung des Kraftfahrzeugs ist beispielsweise bereitgestellt durch: zumindest eine Frontkamera und/oder zumindest eine Seitenkamera und/oder zumindest einen Ultraschallsensor und/oder zumindest einen Laserscanner und/oder zumindest einen Radarsensor, dessen beziehungsweise deren Signale zum Gewinnen einer Information über eine Bordsteinhöhe nutzbar sind. Derartige Einrichtungen sind in der Regel in Kraftfahrzeugen ohnehin vorhanden, sodass lediglich eine zusätzliche Software in der Datenverarbeitungseinrichtung notwendig ist, um die Signale speziell zum Zweck des Gewinnens der Information über die Bordsteinhöhe auszuwerten. Alternativ können solche Einrichtungen gesondert, ausschließlich zum Zwecke der Gewinnung der Information über die Bordsteinhöhe, bereitgestellt werden, damit eine besonders schnelle Reaktion des Kraftfahrzeugs erfolgen kann. Auch hier kann das verstellbare Fahrwerk entweder automatisch angepasst werden oder aufgrund einer Fahrereingabe. In letzterem Fall umfasst das Fahrzeug Mittel zum Ausgeben einer Fahrempfehlung an einen Fahrer des Kraftfahrzeugs, die im Falle des Herannahens des anderen Verkehrsteilnehmers aktiviert werden. So etwa sind hier solche Mittel verwendbar, die ohnehin im Kraftfahrzeug vorhanden sind: ein Lautsprecher - für akustische Sprachaufforderung - oder ein Lautsprecher - für akustisches Signal - in Verbindung mit einem Display. Ein Lautsprecher kann durch einen vibrierenden Aktor ersetzt oder ergänzt werden. Eine Lampe kann allgemein die Aufmerksamkeit des Fahrers hervorrufen und mit einem Display gekoppelt sein, das eine neue Fahrtrichtung anzeigt. So kann das ohnehin vorhandene Navigationssystem eines Kraftfahrzeugs eingesetzt werden, gegebenenfalls geeignet angepasst werden (Möglichkeit zur Darstellung in anderen Farben - Blau beziehungsweise Rot - zum Anzeigen einer besonderen Fahrsituation). An einer Lenkvorrichtung des Kraftfahrzeugs kann ein vibrierender Aktor vorgesehen sein. Die Empfehlung an den Fahrer kann unter Verwendung einer vom Fahrer getragenen Brille oder eines vom Fahrer getragenen Wearables oder von beidem gegeben sein, wozu im Kraftfahrzeug dann eine entsprechende Sende-/ Empfangseinrichtung für drahtgebundene oder drahtlose Kommunikation mit der Brille beziehungsweise dem Wearable vorzusehen ist.

Die Einrichtung zum Gewinnen von Informationen kann akustisch, optisch, oder allgemein drahtlos in den unterschiedlichsten Frequenzbereichen des elektromagnetischen Spektrums arbeiten. Somit ist es möglich, dass die Informationen von anderen Einheiten wie stationären Einheiten an einer Straße, Drohnen und/oder Satelliten oder auch von anderen Verkehrsteilnehmern erfasst werden. Die Informationen können zudem unmittelbar aus von dem anderen Verkehrsteilnehmer abgegebenen Signalen abgeleitet werden (etwa: Intervallerkennung beim Martinshorn oder dergleichen).

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Verkehrssituation, in der ein erfindungsgemäßes Kraftfahrzeug das erfindungsgemäße Verfahren ausführt;
- Fig. 2: ein Flussschaubild zur Erläuterung der Schritte einer beispielhaften Ausführungsform des erfindungsgemäßen Verfahrens.

Gleiche oder funktionsgleiche Elemente sind in den Figuren mit den gleichen Bezugszeichen versehen.

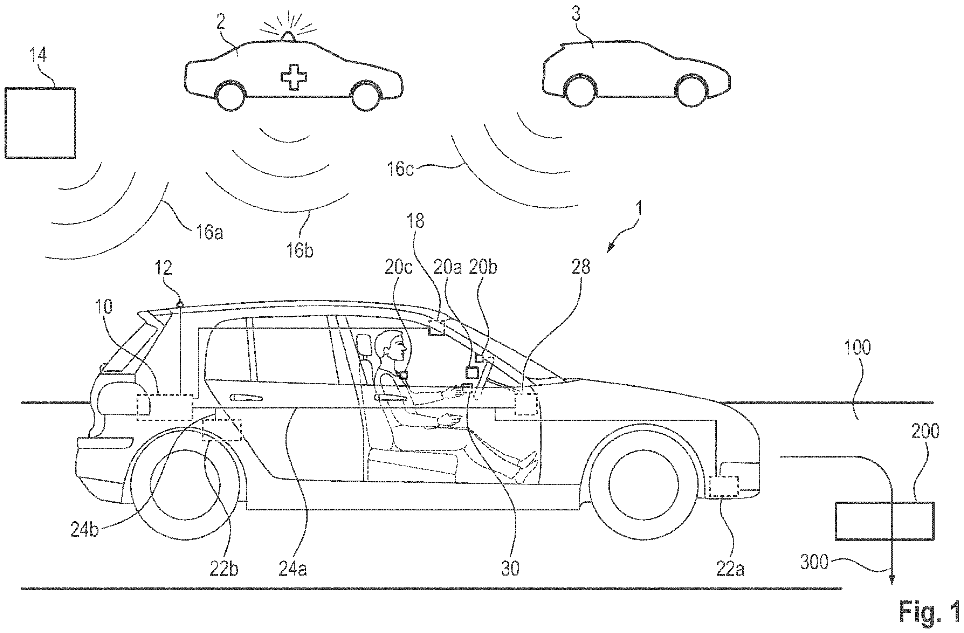

Ein in Fig. 1 im Ganzen mit 1 bezeichnetes Kraftfahrzeug fährt als erster Verkehrsteilnehmer auf einer Straße 100. Bei dem Verfahren soll das Kraftfahrzeug 1 einem zweiten Verkehrsteilnehmer 2 wie etwa einem Krankenwagen oder dergleichen den Weg freimachen. Der Weg kann unmittelbar dem Krankenwagen 2 selbst oder einem dritten Verkehrsteilnehmer 3 freigemacht werden, der seinerseits sonst dem Krankenwagen 2 im Weg stünde.

Bei dem Verfahren wird für das Fahrzeug 1 ein neues Ziel 300 ermittelt, das das Fahrzeug über eine Bordsteinkante 200 führt. Zu diesen Zwecken ist das Kraftfahrzeug 1 wie folgt ausgestattet:
Eine zentrale Datenverarbeitungseinrichtung 10 ("Steuereinrichtung") verarbeitet die Daten sämtlicher Sensoren und steuert sämtliche Aktoren des Kraftfahrzeugs 1 an. Eine erste Sensorgruppe 12 erfasst Signale von externen Einheiten 14 wie etwa stationären Einheiten an einer Straße (nämlich an der Straße 100 selbst oder an einer anderen Straße), Satelliten, Drohnen oder dergleichen, wobei diese Informationen über einen drahtlosen Pfad 16a ("Funk") empfangen werden. Gleichermaßen kann die Sensorgruppe 12 auch über einen drahtlosen Pfad 16b Informationen von dem zweiten Verkehrsteilnehmer 2 und über einen drahtlosen Pfad 16c von zumindest einem dritten Verkehrsteilnehmer 3 empfangen. Die Datenverarbeitungseinrichtung 10 wertet die Informationen, die mittels der Sensorgruppe 12 empfangen wurden, aus, um das Herannahen des zweiten Verkehrsteilnehmers 2 zu erfassen. Die Datenverarbeitungseinrichtung 10 verfügt über eine geeignete Software, welche vorbestimmte Kriterien implementiert (umsetzt), nach denen ermittelt wird, ob das Kraftfahrzeug 1 dem herannahenden zweiten Verkehrsteilnehmer 2 ausweichen sollte oder nicht. Ist dies der Fall, wird aufgrund von ohnehin im Kraftfahrzeug vorhandenen Navigationsdaten (gegebenenfalls über die Sensorgruppe 12) das neue Fahrziel 300 ermittelt. Mittels einer (Sensor-)Einrichtung 18 zum Erfassen von Informationen zur Fahrbahn 100 und/oder zur Fahrbahnbegrenzung 200 wird geprüft, ob zum Erreichen des neuen Fahrziels 300 ein Hindernis wie insbesondere ein Bordstein zu überwinden ist. Diese Einrichtung 18 kann als Frontkamera ausgebildet sein, oder Ultraschallscanner, Laserscanner oder Radarscanner umfassen. Sie ist hier nur beispielhaft oben am Kraftfahrzeug dargestellt, kann aber in mehrere Einheiten aufgeteilt sein und/oder an unterschiedlichsten Orten am Kraftfahrzeug platziert sein. Einem Fahrer des Kraftfahrzeugs 1 wird über eine geeignete Ausgabeeinrichtung 20a (Lautsprecher, Lampe, Display, Vibrationsalarm etc.) die Information gegeben, dass überhaupt einem anderen Verkehrsteilnehmer wie dem zweiten Verkehrsteilnehmer 2 auszuweichen ist und zudem, welches neue Fahrziel 300 bevorzugt anzusteuern ist. Die von der Einrichtung 18 zum Erfassen von Informationen zur Fahrbahn und/oder Fahrbahnbegrenzung gewonnenen Informationen werden von der Datenverarbeitungseinrichtung 10 daraufhin verarbeitet, dass geprüft werden kann, ob das neue Fahrziel 300 nur über einen Bordstein 200 erreichbar ist, der eine Anpassung des Fahrwerks 22a, 22b erfordert. Falls dies der Fall ist, wird dem Fahrer über eine entsprechende Ausgabeeinrichtung 20b (die allerdings zumindest in Teilen mit der Ausgabeeinrichtung 20a, anders als in Fig. 1 gezeigt, auch identisch sein kann) dem Fahrer empfohlen, durch aktive Betätigung einer Eingabeeinrichtung 30 das Fahrwerk 22a, 22b anzupassen, wobei sodann entsprechende Steuerbefehle über Steuerleitungen 24a, 24b von der Datenverarbeitungseinrichtung 10 an das Fahrwerk 22a, 22b gegeben werden. Alternativ ist es möglich, dass das Fahrzeug autonom von einer Einrichtung 28 zum neuen Fahrziel 300 gesteuert wird, wobei die Einrichtung 28 auch gegebenenfalls unmittelbar eine Anpassung des Fahrwerks 22a, 22b bewirkt.

Die Ausgabeeinrichtungen 20a und/oder 20b können mit Wearables 20c, die der Fahrer am Körper trägt, drahtlos zusammenwirken, sodass letztere die Ausgabesignale etwa über Vibrationsalarm an den Fahrer abgeben.

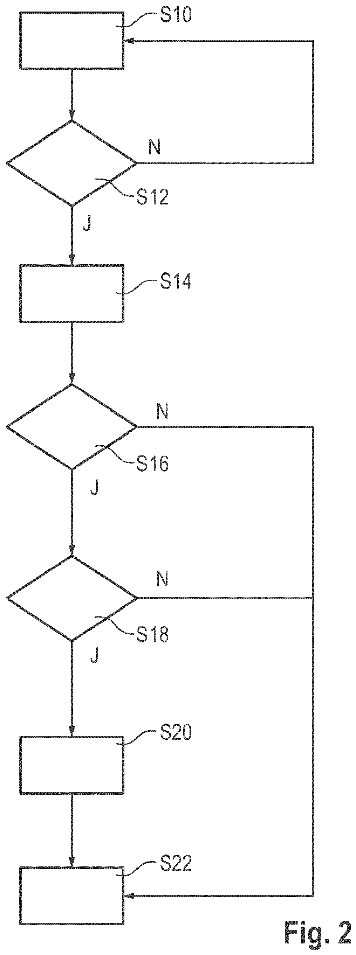

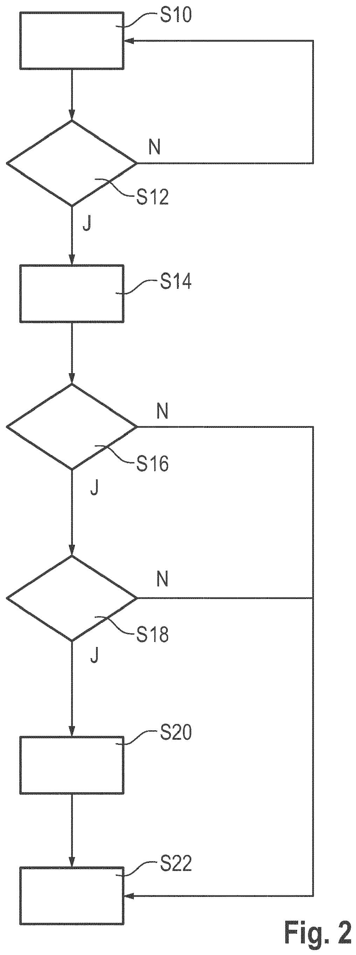

In Fig. 2 ist eine beispielhafte Ausführungsform des erfindungsgemäßen Verfahrens durch ein Flussschaubild illustriert. Hierbei ist von einem Kraftfahrzeug mit verstellbarem Fahrwerk ausgegangen. Abweichungen ergeben sich, wenn das Fahrwerk des Kraftfahrzeugs nicht verstellbar ist, hinsichtlich der Schritte S18 und S20.

In Schritt S10 wird zunächst der normale Betrieb des Kraftfahrzeugs, bei dem dauerhaft Informationen zur aktuellen und/oder einer möglichen zukünftigen Verkehrssituation auf der Straße gewonnen werden, abgebildet. Gemäß Schritt S12 wird ermittelt, ob nach einem vorbestimmten Kriterium ein Abweichen von der gegenwärtigen Fahrt- und/oder Lenkrichtung oder von einem Navigationsziel auf der Straße angezeigt ist, um dem zweiten Verkehrsteilnehmer 2 unmittelbar oder mittelbar über dritte Verkehrsteilnehmer 3 den Weg freizumachen. Ist der Ausgang der Ermittlung negativ, wird zum Schritt S10 zurückgekehrt. Falls eine vorbestimmte Art von zweitem Verkehrsteilnehmer in vorbestimmter Situation herannaht und somit das vorbestimmte Kriterium erfüllt ist, wird zum Schritt S14 übergegangen: Gemäß Schritt S14 wird ein neues Fahrziel 300 auf oder an der Straße ermittelt. Sodann wird in Schritt S16 ermittelt, ob zum Erreichen des neuen Fahrziels 300 auf ein Hindernis wie den Bordstein 200 gefahren werden muss. Ist dies nicht der Fall, wird unmittelbar zum Schritt S22 übergegangen, sonst zum Schritt S18. In Schritt S18 wird geprüft, ob das Fahrwerk 22a, 22b des Kraftfahrzeugs 1 an das Hindernis 200 angepasst werden muss. Ist dies nicht der Fall, wird unmittelbar zum Schritt S22 übergegangen, sonst zum Schritt S20, demgemäß veranlasst wird, dass das Fahrwerk 22a, 22b angepasst wird (über die Ausgabeeinrichtung 20b und die Eingabeeinrichtung 30, oder autonom). Sodann wird im Schritt S22 veranlasst, dass das Kraftfahrzeug das neue Fahrziel 300 ansteuert (mittels Ausgabeeinrichtung 20a und Eingabeeinrichtung 30, oder autonom mittels der entsprechenden Einrichtung 28).

Im Ergebnis wird der Fahrer gerade in einer Stresssituation, in der sich ein zweites Fahrzeug wie ein Krankenwagen nähert, durch geeignete technische Mittel durch die Erfindung passend unterstützt, den Ausweichvorgang vorzunehmen.

### Bezugszeichenliste

- 1: Kraftfahrzeug
- 2: zweiter Verkehrsteilnehmer
- 3: dritter Verkehrsteilnehmer
- 10: zentrale Datenverarbeitungseinrichtung
- 12: erste Sensorgruppe
- 14: externe Einheit
- 16a: drahtloser Pfad
- 16b: drahtloser Pfad
- 16c: drahtloser Pfad
- 18: Einrichtung zum Erfassen von Informationen
- 20a: Ausgabeeinrichtung
- 20b: Ausgabeeinrichtung
- 20c: Wearable
- 22a: Fahrwerk
- 22b: Fahrwerk
- 24a: Steuerleitung
- 24b: Steuerleitung
- 28: Einrichtung für autonomes Fahren
- 30: Eingabeeinrichtung
- 100: Straße
- 200: Hindernis
- 300: Fahrziel
- S10: Verfahrensschritt
- S12: Verfahrensschritt
- S14: Verfahrensschritt
- S16: Verfahrensschritt
- S18: Verfahrensschritt
- S22: Verfahrensschritt

## Patentansprüche

1. Verfahren zum Betreiben eines Kraftfahrzeugs (1) als erstem Verkehrsteilnehmer auf
einer Straße (100), mit den Schritten:
a) Gewinnen von Informationen zu der aktuellen und/oder einer möglichen künftigen Verkehrssituation auf der Straße (100),
b) Ermitteln anhand der gewonnenen Informationen, ob nach einem vorbestimmten Kriterium ein Abweichen von der gegenwärtigen Fahrt- und/oder Lenkrichtung oder von einem Navigationsziel auf der Straße angezeigt ist, um einem zweiten Verkehrsteilnehmer (2) unmittelbar oder mittelbar über dritte Verkehrsteilnehmer (3) den Weg freizumachen, und falls ja,
c) Ermitteln eines neuen Fahrziels (300) auf oder an der Straße,
d) Ermitteln, ob zum Erreichen des neuen Fahrziels (300) auf ein Hindernis (200) gefahren werden muss, und falls ja,
e) Prüfen, ob eine Einstellung des Fahrwerks (22a, 22b) des Kraftfahrzeugs (1) mit dem Auffahren auf das Hindernis (200) vereinbar ist, und falls ja,
f) Veranlassen, dass das Kraftfahrzeug (1) das neue Fahrziel (300) ansteuert.

2. Verfahren nach Anspruch 1, **dadurch gekennzeichnet, dass** dem Fahrer mittels optischen, akustischen und/ oder haptischen Signalen mitgeteilt wird, dass das Hindernis nicht überfahrbar ist, wenn die Einstellung des Fahrwerks (22a, 22b) mit dem Fahren auf das Hindernis nicht vereinbar ist.

3. Verfahren nach Anspruch 2, **dadurch gekennzeichnet, dass** dem Fahrer durch die Signale auch die Möglichkeit mitgeteilt wird, das Fahrwerk (22a, 22b) durch Eingabe an einer Eingabeeinrichtung (30) an das Hindernis (200) anzupassen.

4. Verfahren nach Anspruch 1 oder 2, **dadurch gekennzeichnet, dass** das Fahrwerk (22a, 22b) des Kraftfahrzeugs (1) automatisch passend eingestellt wird.

5. Verfahren nach einem der vorhergehenden Ansprüche, **dadurch gekennzeichnet, dass** der zweite Verkehrsteilnehmer (2) ein Krankenwagen, ein Feuerwehrauto oder ein Polizeiwagen ist und dass in Schritt a) akustisch im hörbaren Frequenzbereich und/oder per Ultraschall und/oder optisch und/oder per Infrarot und/oder per Ultraviolett und/oder anhand von Signalen von dem zweiten und/oder von dritten Verkehrsteilnehmern (2, 3) und/oder anhand von Signalen von stationären Einheiten (14) an einer Straße und/oder von Drohnen und/oder Satelliten die Information des Herannahens des zweiten Verkehrsteilnehmers gewonnen wird.

6. Verfahren nach einem der vorhergehenden Ansprüche, **dadurch gekennzeichnet, dass**
der Schritt f) beinhaltet, dass dem Fahrer zumindest ein Signal zur Empfehlung des neuen Fahrziels (300) gegeben wird.

7. Verfahren nach Anspruch 6, **dadurch gekennzeichnet, dass** die Empfehlung dem Fahrer unter Verwendung mindestens eines der folgenden Mittel gegeben wird:
akustische Sprachaufforderung, die Details zum neuen Fahrziel (300) angibt, akustisches und/oder haptisches Signal zur Gewinnung der Aufmerksamkeit des Fahrers verbunden mit optischer Detailanzeige einer neuen Fahrtrichtung und/oder des neuen Fahrziels (300) auf einem Display,
optische Signalisierung zur Gewinnung der Aufmerksamkeit des Fahrers verbunden mit optischer Detailanzeige einer neuen Fahrtrichtung und/oder des neuen Fahrziels (300) auf einem Display außerhalb einer normalen Navigation,
optische Detailanzeige einer neuen Fahrtrichtung und/oder des neuen Fahrziels auf einem Display integriert in eine laufende oder spontan aktivierte neue Navigation,
haptische Signale an einer Lenkvorrichtung des Kraftfahrzeugs,
Signale an eine vom Fahrer getragene Brille oder vom Fahrer getragene Wearables (20c).

8. Kraftfahrzeug (1), mit:
einer Einrichtung (12) zum Gewinnen von Informationen zur aktuellen und/oder einer möglichen künftigen Verkehrssituation auf einer von dem Kraftfahrzeug (1) befahrenen Straße (100);
einer Einrichtung (18) zum Erfassen von Informationen zur Fahrbahn und/oder Fahrbahnbegrenzung (200) in der Umgebung des Kraftfahrzeugs (1);
einer Datenverarbeitungseinrichtung (10), die ausgelegt ist, die von der Einrichtung (12) zum Gewinnen von Informationen gewonnenen Informationen zu empfangen und auf das Herannahen eines solchen anderen Verkehrsteilnehmers (2) nach einem vorbestimmten Kriterium auszuwerten, dem der Weg freizumachen ist;
wobei die Datenverarbeitungseinrichtung (10) anhand der von der Einrichtung zum Erfassen (18) gewonnenen Informationen ermittelt, durch Ansteuern welches neuen Fahrziels (300) dem anderen Verkehrsteilnehmer (2) der Weg freigemacht werden kann, wobei im Falle des Herannahens des anderen Verkehrsteilnehmers (2) die Einrichtung (18) zum Erfassen von Informationen zur Fahrbahn und/oder Fahrbahnbegrenzung in der Umgebung des Kraftfahrzeugs (1) aktiviert wird oder ihre Abfrage aktiviert wird und wobei die Datenverarbeitungseinrichtung (10) ausgelegt ist, die sodann erfassten Informationen zur Fahrbahn und/oder Fahrbahnbegrenzung (200) in der Umgebung des Kraftfahrzeugs (1) daraufhin auszuwerten, ob es ein Hindernis (200) gibt und eine Einstellung des Fahrwerks (22a, 22b) mit dem Auffahren auf das Hindernis (200) vereinbar ist, wobei die Datenverarbeitungseinrichtung (10) ferner ausgelegt ist, in diesem Fall zu veranlassen, dass das neue Fahrziel (300) angesteuert wird.

9. Kraftfahrzeug (1) nach einem Anspruch 8, **dadurch gekennzeichnet, dass** die Einrichtung (18) zum Erfassen von Informationen zur Fahrbahn und/oder Fahrbahnbegrenzung in der Umgebung des Kraftfahrzeugs bereitgestellt ist durch: zumindest eine Frontkamera und/oder zumindest eine Seitenkamera und/oder zumindest einen Ultraschallsensor und/oder zumindest einen Laserscanner und/oder zumindest einen Radarsensor, dessen beziehungsweise deren Signale zum Gewinnen einer Information über eine Bordsteinhöhe nutzbar sind.

10. Kraftfahrzeug (1) nach Anspruch 8 oder 9, **dadurch gekennzeichnet, dass** es ein verstellbares Fahrwerk (22a, 22b) aufweist, das an Hindernisse, insbesondere Bordsteine, anpassbar ist

11. Kraftfahrzeug (1) nach Anspruch 10, **dadurch gekennzeichnet, dass** das verstellbare Fahrwerk (22a, 22b) automatisch an ein zum Zwecke des Freimachens des Wegs ermitteltes neues Fahrziel (200) angepasst wird.

12. Kraftfahrzeug (1) nach Anspruch 10, **dadurch gekennzeichnet, dass** die Datenverarbeitungseinrichtung (10) bewirkt, dass einem Fahrer des Kraftfahrzeugs zumindest ein Signal ausgegeben wird, um ihn zum Verstellen des Fahrwerks (22a, 22b) mittels Fahrereingabe aufzufordern, und dass das Fahrwerk (22a, 22b) nach Empfang einer solchen Fahrereingabe an ein zum Zwecke des Freimachens des Wegs ermitteltes neues Fahrziel angepasst wird.

13. Kraftfahrzeug nach einem der Ansprüche 8 bis 12, **gekennzeichnet durch** Mittel (20a, 20c) zum Ausgeben einer Fahrempfehlung an einen Fahrer des Kraftfahrzeugs (1), die im Falle des Herannahens des anderen Verkehrsteilnehmers aktiviert werden.

14. Kraftfahrzeug nach Anspruch 13, **dadurch gekennzeichnet, dass** die Empfehlung dem Fahrer unter Verwendung mindestens eines der folgenden Mittel (20a, 20c) gegeben wird:
Lautsprecher, der eine akustische Sprachaufforderung ausgibt, die Details zum neuen Fahrziel angibt;
Lautsprecher für akustisches Signal und/oder vibrierender Aktor für haptisches Signal zur Gewinnung der Aufmerksamkeit des Fahrers verbunden mit Display zur optischen Detailanzeige einer neuen Fahrtrichtung und/oder des neuen Fahrziels;
Lampe für optische Signalisierung zur generellen Gewinnung der Aufmerksamkeit des Fahrers verbunden mit Display außerhalb einer normalen Navigation zur optischen Detailanzeige einer neuen Fahrtrichtung;
Display, das bei Navigation im Kraftfahrzeug verwendet wird, zur optischen Detailanzeige einer neuen Fahrtrichtung;
vibrierender Aktor an einer Lenkvorrichtung des Kraftfahrzeugs zur Erzeugung haptischer Signale;
vom Fahrer getragene Brille und/oder vom Fahrer getragene Wearables (20c) in Verbindung mit einer Sende-/Empfangsvorrichtung des Kraftfahrzeugs hierfür.

15. Kraftfahrzeug nach einem der Ansprüche 8 bis 14, **dadurch gekennzeichnet, dass** die Einrichtung (12) zum Gewinnen von Informationen die Informationen anhand akustischer Signale im hörbaren Frequenzbereich und/oder per Ultraschall und/oder anhand optischer Signale und/oder per Infrarot und/ oder per Ultraviolett und/oder anhand von Signalen von weiteren Verkehrsteilnehmern und/oder anhand von Signalen von stationären Einheiten an einer Straße und/oder von Drohnen und/oder Satelliten erfasst.
